## Europäisches Patentamt
## European Patent Office
## Office européen des brevets

(19)

(11) Veröffentlichungsnummer: **0 230 614**
**B1**

(12) **EUROPÄISCHE PATENTSCHRIFT**

(45) Veröffentlichungstag der Patentschrift:
**21.06.89**

(51) Int. Cl.⁴: **B23K 11/06, B21D 51/26**

(21) Anmeldenummer: **86117609.7**

(22) Anmeldetag: **17.12.86**

(54) Verfahren und Vorrichtung zum Verbinden eines Hohlkörpers mit einem Innenkörper.

(30) Priorität: **20.12.85 CH 5452/85**

(43) Veröffentlichungstag der Anmeldung:
**05.08.87 Patentblatt 87/32**

(45) Bekanntmachung des Hinweises auf die Patenterteilung:
**21.06.89 Patentblatt 89/25**

(84) Benannte Vertragsstaaten:
**AT BE CH DE ES FR GB GR IT LI LU NL SE**

(56) Entgegenhaltungen:
**DE-C- 307 934**
**DE-C- 722 738**
**GB-A- 26 645**
**US-A- 2 766 369**

(73) Patentinhaber: **ELPATRONIC AG, Baarerstrasse 117, CH-6300 Zug(CH)**

(72) Erfinder: **Gordon, Howard E., 500 Ridgefield RD, Wilton Connecticut 6891(US)**
Erfinder: **Urech, Werner, Rheingasse 28, Ch-8434 Kaiserstuhl(CH)**

(74) Vertreter: **Hotz, Klaus, Dipl.-El.-Ing. / ETH, c/o SOUDRONIC AG Industriestrasse 35 Postfach 11, CH-8962 Bergdietikon(CH)**

## Beschreibung

Die Erfindung betrifft ein Verfahren zum dichten Verbinden eines runden Hohlkörpers aus Blech mit einem komplementären Innenkörper zu einem Werkstück, wobei diese beiden Körper längs einer gemeinsamen Achse ineinandergeschoben werden und wobei die Verbindung mittels elektrischer Widerstandsschweissung durch Anlegen von Elektrodenrollen an der Aussenseite des Werkstücks während eine Relativdrehung zwischen den Elektrodenrollen einerseits und dem Werkstück andererseits hergestellt wird.

Werkstücke der genannten Art, beispielsweise Flüssiggasbehälter für Campingkochgeräte, Lötlampen und dgl. werden oft durch eine Falzverbindung hergestellt. Dabei wird in einen tiefgezogenen Hohlkörper aus Blech ein ebenfalls aus Blech bestehender, zum Innenraum des Hohlkörpers hin gewölbter Boden eingeschoben und beide werden dadurch miteinander verbunden, dass ihre Ränder nach aussen umgefalzt werden. Dieses Verfahren führt nur dann zu einer im allgemeinen hinreichend dichten Verbindung, wenn die Blechdicke des Innenkörpers wenigstens annähernd gleich gross ist wie diejenige des Hohlkörpers. Schwierigkeiten entstehen bei solchen Anwendungsfällen u.a. dann, wenn der Innenkörper aus Festigkeitsgründen dicker sein muss als der Hohlkörper.

Dies gilt beispielsweise für Gehäuse von Ölfiltern für Kraftfahrzeugmotoren. Solche Gehäuse bestehen ebenfalls aus einem tiefgezogenen Hohlkörper aus Blech und einem Boden, der den zugehörigen Innenkörper bildet. Der Boden trägt einerseits einen langgestreckten, mehrteiligen Filter, der sich bis in die Nähe des geschlossenen Endes des Hohlkörpers erstreckt, und ist andererseits zur Befestigung des Filters am Gehäuse einer Ölpumpe ausgebildet; der Innenkörper besteht deshalb aus einer Metallplatte, die um ein Vielfaches dicker als das Blech des Hohlkörpers ist und mit diesem deshalb nicht unmittelbar durch Falzen verbunden werden kann. Es ist bisher üblich, die Falzverbindung zwischen dem Hohlkörper aus dünnem Blech und einem aus ebenso dünnem Blech bestehenden Zwischenring herzustellen, der zuvor mit der dicken Platte verschweisst worden ist. Zwischen den beiden Blechen wird vor dem Falzen eine Dichtung eingelegt. Dieses bekannte Verfahren ist umständlich und dementsprechend kostspielig und setzt wie jedes vergleichbare Falzverfahren voraus, dass die beiden Körper, die miteinander verbunden werden sollen, ausreichend weit wegragende Ränder aufweisen, damit auf ihrer radial inneren Seite ebenso wie auf ihrer Aussenseite ausreichend Platz für Falzwerkzeuge vorhanden ist. Der auf diese Weise hergestellte Falz umschliesst einen Raum, der in vielen Fällen nicht nutzbar ist.

Ein Verfahren der eingangs genannten Gattung, also unter Anwendung der elektrischen Widerstandsschweissung, ist aus der DE-C 307 934 bekannt. Gemäss diesem wird bei der Herstellung becherförmiger Werkstücke der Boden mit der einen Elektrode von aussen axial gegen einen Innendorn gehalten, während die andere Elektrode – eine Elektrodenrolle – die Becherwand schräg oder radial von aussen gegen den Bodenrand drückt. Es wird dabei also der Schweissstrom an einem Teil des Werkstücks zu- und am andern Teil abgeführt. Es entstehen hierbei immer exzentrische Radialkräfte infolge der einen Elektrodenrolle, die vom fliegendgelagerten Dorn bzw. von der andern Elektrode aufgenommen werden müssen. Ausserdem muss der Boden des Werkstücks sowohl an der Aussenseite wie auch im Innern des entstehenden Bechers zugänglich sein, wodurch die Anwendbarkeit dieses Verfahrens erheblich eingeschränkt ist.

Der Erfindung liegt die Aufgabe zugrunde, ein Verfahren der eingangs beschriebenen Gattung derart weiterzubilden, dass auf rationelle Weise und ohne die beim Stand der Technik bestehenden Einschränkungen hinsichtlich Gestaltung des Werkstückes eine einwandfreie Verbindung zwischen Hohlkörper und Innenkörper hergestellt werden kann.

Diese Aufgabe ist erfindungsgemäss dadurch gelöst, dass
– zwischen den beiden Körpern ein Pressitz in einer schmalen Ringzone hergestellt wird, und
– anschliessend mindestens zwei Elektrodenrollen in der Ringzone radial von aussen her an den Hohlkörper angelegt werden, wobei der Schweissstrom ausschliesslich durch die aussen am Hohlkörper anliegenden Elektroden zu- und abgeführt wird.

Es hat sich erstaunlicherweise gezeigt, dass der Schweissstrom nicht oder nur zu einem unbedeutenden Teil unmittelbar über den Hohlkörper von einer Elektrode zur anderen fliesst. Der in einer schmalen Ringzone hergestellte Pressitz und der von den Elektroden in der beim Widerstandsschweissen üblichen Weise ausgeübte Druck sorgt dafür, dass der Schweissstrom durch beide Körper fliesst und im Bereich jeder Elektrode eine Schweissung erzeugt, ohne dass der Innenkörper vom einer Elektrode unmittelbar berührt wird. Da ein Stromanschluss nur aussen am Hohlkörper erfolgt, vereinfachen sich die Kontaktprobleme, die Elektrodenanordnung und der Arbeitsablauf beim Wechsel der Werkstücke erheblich, und bei der Formgebung der zu verbindenden Teile stehen zahlreiche Möglichkeiten offen. Da bei der Relativdrehung an allen angelegten Elektroden gleichzeitig eine Schweissung erfolgt, wird die Schweissverbindung über den vollen Umfang bereits nach einer Teildrehung des Werkstücks (entsprechend der Elektrodenzahl) vollendet.

Das erfindungsgemässe Verfahren hat sich beim Herstellen von Ölfiltergehäusen der oben erwähnten Art besonders bewährt; es eignet sich aber auch beispielsweise zum Verschweissen von konzentrischen Rohren, wobei es erforderlich sein kann, dasjenige Rohr, das den Innenkörper bildet, durch einen eingeführten Dorn mechanisch abzustützen. Wesentlich ist auf jeden Fall, dass es nicht erforderlich ist, den Innenkörper über eine an ihm liegende Elektrode mit einem Pol einer Stromquelle zu verbinden.

Die Ringzone hat vorzugsweise eine Breite in der Grössenordnung der ein- bis dreifachen Blechdicke des Hohlkörpers. Eine solche im Verhältnis zum Durchmesser des Hohlkörpers in jedem Fall sehr geringe Breite der Ringzone schafft günstige Voraussetzungen für eine gleichmässige Erwärmung des Hohlkörpers und des Innenkörpers an den Schweissstellen.

Im gleichen Sinne wirkt die weitere, bevorzugte Massnahme, dass der Hohlkörper beim Herstellen des Pressitzes über seine Elastizitätsgrenze hinaus aufgeweitet wird. Dies geschieht zweckmässigerweise dadurch, dass am Innenkörper eine Ringrippe angeformt wird, die beim Ineinanderschieben der beiden Körper den Pressitz erzeugt.

Es kann ferner vorteilhaft sein, wenn der Hohlkörper nach dem Herstellen des Pressitzes, vor oder nach dem Schweissen, in einem die Ringrippe übergreifenden Endbereich radial nach innen verformt wird. Dadurch lässt sich unter anderem verhindern, dass der Innenkörper sich gegenüber dem Hohlkörper verschiebt, wenn dieser sich unter dem Einfluss der Schweisshitze weitet.

Das mit der Ringrippe am Innenkörper ausgeführte Verfahren kann erfindungsgemäss dadurch weitergebildet werden, dass am Innenkörper vor der Ringrippe ein Zentrieransatz ausgebildet wird, der mit geringem Spiel in den Hohlkörper passt, und die Ringrippe ein von dem Zentrieransatz aus allmählich ansteigendes Profil aufweist.

Besonders vorteilhaft ist es, wenn die Elektroden beim Widerstandsschweissen auf dem Hohlkörper abgewälzt werden, wie dies beim elektrischen Widerstands-Rollennaht-Schweissen an sich bekannt ist.

Die Schweissung wird vorzugsweise in zwei Stufen in der Weise durchgeführt, dass bei einer anfänglichen Relativdrehung zwischen den beiden Körpern einerseits und den Elektroden andererseits der Schweissstrom mehrfach ein- und ausgeschaltet wird, wodurch die beiden Körper zunächst nur zusammengeheftet werden, und anschliessend bei fortgesetzter Relativdrehung der Schweissstrom zum Herstellen einer dichten Schweissnaht eingeschaltet bleibt.

Eine besonders schnelle Arbeitsweise ist dann möglich, wenn die Widerstandsschweissung mit drei Elektroden ausgeführt wird, die mit Drehstrom gespeist werden. In diesem Fall genügt es für das Heften und anschliessende Dichtschweissen, wenn die anfängliche und fortgesetzte Relativdrehung um je ungefähr 120° ausgeführt werden.

Die Erfindung betrifft ferner eine Vorrichtung zum Verbinden eines runden Hohlkörpers aus Blech mit einem komplementären Innenkörper mittels elektrischer Widerstandsschweissung nach dem erfindungsgemässen Verfahren, mit

– einer Halterung für einen Hohlkörper mit einem eingeschobenen Innenkörper, welche um eine Drehachse, die mit der gemeinsamen Achse beider Körper übereinstimmt, drehbar ist,

– mindestens zwei Elektrodenrollen, deren Drehachsen in Betriebsstellung mindestens annähernd parallel zur Drehachse der Halterung angeordnet sind,

– einem Zustellantrieb für eine radiale Relativbewegung zwischen der Halterung und den Elektrodenrollen, und mit

– einem Drehantrieb für die Relativdrehung zwischen den Elektrodenrollen einerseits und dem Hohlkörper mit eingeschobenem Innenkörper andererseits.

Eine Schweissvorrichtung dieser Art ist aus der US-A-2 766 369 bekannt. Dort sind zum gleichzeitigen Schweissen von zwei parallelen Ringnähten an einem Behälter zwei axial versetzte, radial zustellbare Elektrodenrollen auf der Aussenseite des Werkstücks angeordnet. Jeder dieser äusseren Elektrodenrollen ist eine Gegenelektrodenrolle zugeordnet, die beide auf einem freitragenden Arm gelagert sind, welcher in den Innenraum des Werkstücks ragt. Es werden also beim Schweissvorgang wiederum beide zu verbinden den Teile über Elektrodenrollen kontaktiert, und es ist erforderlich, dass der Innenraum des Werkstücks für die Gegenelektroden zugänglich und frei ist. Zum Ein- und Ausfahren der Gegenelektroden und zum Manipulieren des Werkstücks sind ziemlich aufwendige Bewegungseinrichtungen notwendig.

Die erfindungsgemässe Vorrichtung soll demgegenüber einfachere und raschere Bewegungsabläufe ermöglichen und keine zusätzlich einschränkenden Bedingungen an die Art und Formgebung der Werkstücke stellen. Sie ist dadurch gekennzeichnet,

– dass die mindestens zwei Elektrodenrollen rings um die Drehachse der Halterung symmetrisch verteilt auf der Höhe einer zu schweissenden Ringzone angeordnet sind, und

– dass der Schweissstrom ausschliesslich über die mindestens zwei Elektrodenrollen zu- und abgeführt wird.

Dank dieser Bauweise der Vorrichtung bleibt beim Schweissen der Innenraum der Werkstücke frei von jeglichen Vorrichtungsteilen, wodurch die Manipulation sich erheblich vereinfacht und wesentlich kürzere Taktzeiten möglich werden.

Vorteilhafte Weiterbildungen der erfindungsgemässen Vorrichtung sind in den Ansprüchen 12 bis 17 angegeben.

Ein Ausführungsbeispiel der Erfindung wird im folgenden anhand schematischer Zeichnungen mit weiteren Einzelheiten erläutert. Es zeigt:

Fig. 1 eine Seitenansicht einer Vorrichtung zum dichten Verschliessen von Filtergehäusen,
Fig. 2 den senkrechten Teilschnitt II–II in Fig. 1,
Fig. 3 den senkrechten Teilschnitt III–III in Fig. 1,

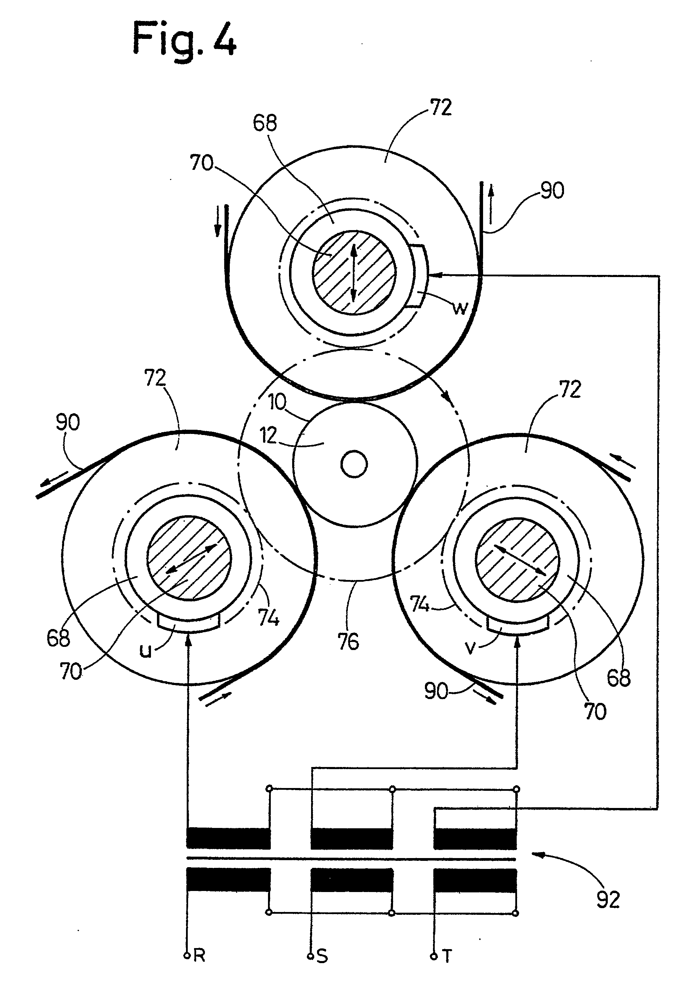

Fig. 4 den waagerechten Schnitt IV–IV in Fig. 3,
Fig. 5 eine Variante zu Fig. 1 bis 4,
Fig. 6 ein Schweissstromdiagramm.

Die dargestellte Vorrichtung hat die Aufgabe, Hohlkörper 10 mit je einem Innenkörper 12 zu einem dichten Gehäuse zusammenzufügen. Die Hohlkörper 10 sind zylindrische Tiefziehteile von kreisförmigem Querschnitt mit einem Innendurchmesser von beispielsweise 94 mm aus Stahlblech von beispielsweise 0,5 mm Dicke. Die Innenkörper 12 sind kreisrunde Stahlplatten mit einem grössten Aussendurchmesser von beispielsweise 95 mm und einer Dicke von beispielsweise 6 mm. Auf jedem Innenkörper 12 ist ein Filter 14 befestigt, der in Bauart und Größe üblichen Ölfiltern für Kraftfahrzeugmotoren entspricht. Der Innenkörper 12 hat eine zentrale Gewindebohrung 16 sowie mehrere rings um diese angeordnete Öffnungen 18. Zwischen den Öffnungen 18 und dem Filter 14 ist eine Ventilplatte 20 aus elastischem Kunststoff oder Gummi angeordnet.

Bei der üblichen Betriebsweise einer solchen Filteranordnung wird Motoröl durch die Öffnungen 18 des Innenkörpers 12 in das von diesem und dem Hohlkörper 10 gebildete dichte Gehäuse eingepumpt; das Motoröl strömt durch den Filter 14 und lagert Verunreinigungen an dessen Außenseite ab, um dann gereinigt durch die Gewindebohrung 16 abzuströmen. Die Ventilplatte 20 verhindert eine Strömung in entgegengesetzter Richtung.

Für den Gebrauch der Filteranordnung wird der Innenkörper mit seiner Gewindebohrung 16 auf einen entsprechenden Gewindestutzen aufgeschraubt, der an oder nahe dem Zylinderblock eines Verbrennungsmotors angeordnet ist. Die Filteranordnung ist im Betrieb Erschütterungen ausgesetzt, die durch Motorschwingungen und durch Fahrt des Kraftfahrzeugs auf unebener Fahrbahn entstehen; bei solchen Erschütterungen wird die Verbindung zwischen Hohlkörper 10 und Innenkörper 12 stark belastet, zumal erhebliche Biegemomente dadurch entstehen, daß der Schwerpunkt des Hohlkörpers 10 und des Filters 14 verhältnismäßig weit vom Innenkörper 12 entfernt sind. Die Verbindung zwischen Hohlkörper 10 und Innenkörper 12 muß diesen Belastungen auf Dauer standhalten und dabei vollständig dicht bleiben.

Um eine Verbindung herzustellen, die diesen Anforderungen entspricht, wird der Innenkörper 12 an seinem Umfang mit einer Ringrippe 22 und einem vor dieser angeordneten Zentrieransatz 24 ausgebildet. Die Ringrippe 22 hat ein trapezförmiges Profil mit einer vom Zentrieransatz 24 aus unter einem Winkel von beispielsweise 45° ansteigenden Schenkel und einer verhältnismäßig geringen Breite, die außen nur etwa 1 mm beträgt. Der Hohlkörper 10 hat einen geringfügig aufgeweiteten Rand, der sich leicht auf den Zentrieransatz 24 aufstecken und anschließend durch Anwendung einer größeren axialen Kraft über die Ringrippe 22 hinwegschieben läßt, wobei er sich weitet und in einer Ringzone 25, die entsprechend der Ringrippe 22 nur etwa 1 mm breit ist, einen Preßsitz mit dem Innenkörper 12 bildet. Im Bereich dieser Ringzone 25 werden Hohlkörper 10 und Innenkörper 12 anschließend miteinander verschweißt.

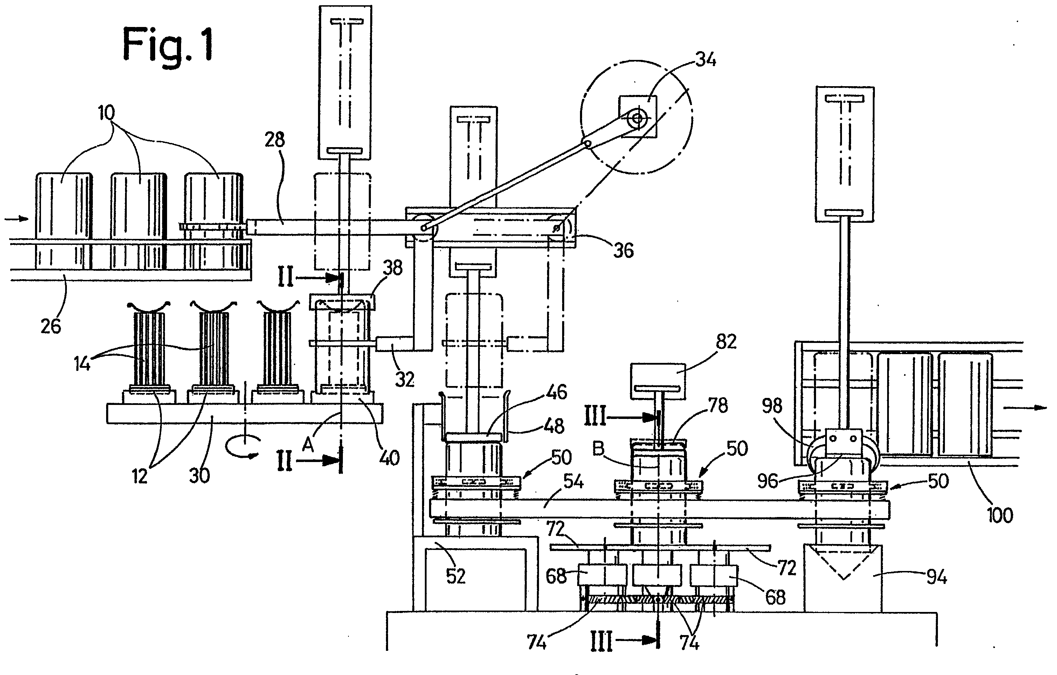

Der Durchführung dieser Arbeitsgänge dient die in Fig. 1 dargestellte Vorrichtung mit einem oberen Förderer 26 für leere Hohlkörper 10, einem oberen Greifer 28 zum Entnehmen je eines dieser Hohlkörper und einem unteren Förderer 30 für Innenkörper 12 mit je einem darauf befestigten Filter 14 samt zugehöriger Ventilplatte 20. Dem unteren Förderer 30 ist ein unterer Greifer 32 zugeordnet; beide Greifer 28 und 32 sind von einem gemeinsamen Greiferantrieb 34 längs einer waagerechten Führung 36 zwischen einer Entnahmestellung und einer Abgabestellung hin- und herbewegbar. In Fig. 1 sind die beiden Greifer 28 und 32 in ihrer Entnahmestellung mit vollen Linien und in ihrer Abgabestellung mit strichpunktierten Linien gezeichnet. Gegenüber dem oberen Greifer 28 ist der untere Greifer 32 in Richtung auf seine Entnahmestellung um eine Strecke versetzt, die mit der Hubstrecke beider Greifer übereinstimmt.

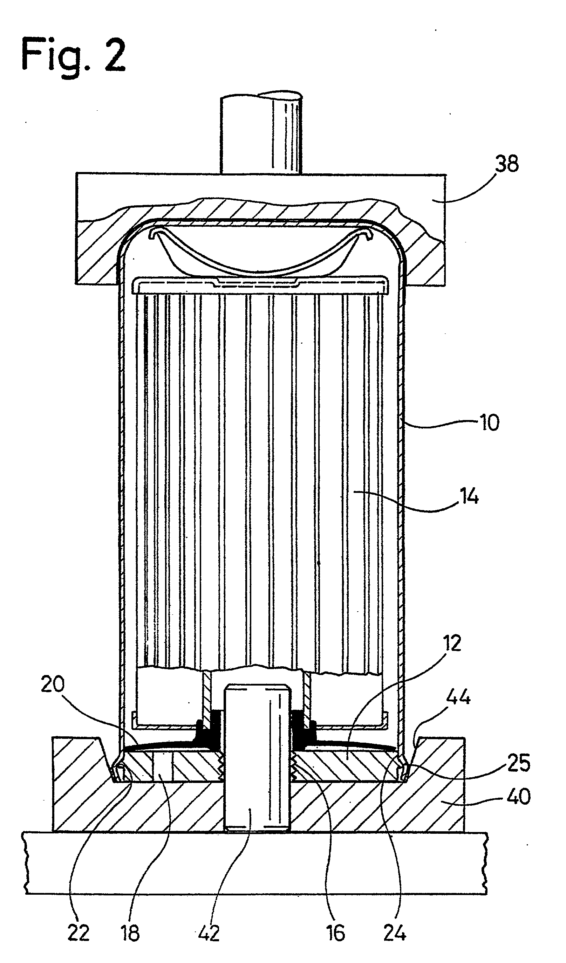

Bei jedem Arbeitszyklus holt der obere Greifer 28 einen Hohlkörper 10 vom oberen Förderer 26 in eine Stellung unterhalb eines ersten Stößels 38. Dieser schiebt den Hohlkörper 10 auf einen Innenkörper 12, der auf einem senkrecht unter dem Stößel 38 angeordneten Gesenk 40 liegt und durch einen an diesem befestigten Zapfen 42 zentriert ist. Beim Aufschieben des Hohlkörpers 10 auf den Innenkörper 12 entsteht in der Ringzone 25 der beschriebene Preßsitz und der über die Ringrippe 22 hinweggeschobene Randbereich des Hohlkörpers 10 wird durch eine sich konisch nach unten verjüngenden Wand 44 des Gesenks 40 nach innen gestaucht, wie in Fig. 2 dargestellt.

Die beiden Greifer 28 und 32 sind inzwischen in ihre Entnahmestellung zurückgekehrt; der untere Greifer 32 erfaßt nun die auf diese Weise vormontierte Filteranordnung und bewegt sich mit ihr in seine Abgabestellung senkrecht unterhalb eines zweiten Stößels 46, der die Filteranordnung nun durch eine ortsfeste Führung 48 hindurch in eine Halterung 50 drückt, bis der Innenkörper 12 gegen einen ortsfesten Anschlag 52 stößt. Hohlkörper 10 und Innenkörper 12 der vormontierten Filteranordnung haben eine gemeinsame Achse A, die mit der senkrechten Achse B der Halterung 50 übereinstimmt.

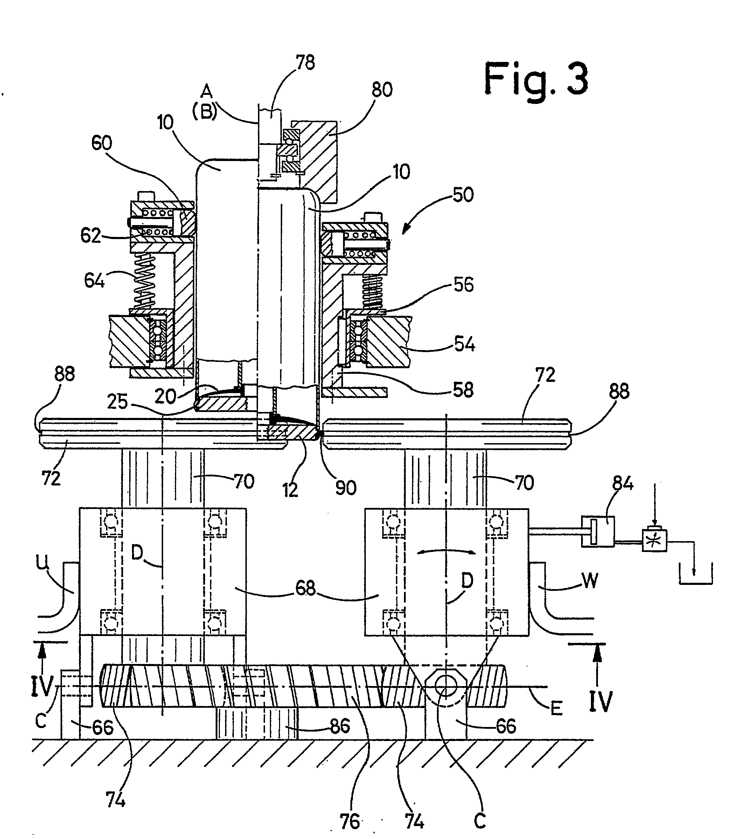

Die Halterung 50 ist eine von vier gleichen Halterungen, die in Winkelabständen von 90° an einem Revolvertisch 54 angeordnet sind. Jede der Halterungen 50 hat einen Flanschring 56, der in einer Aussparung des Revolvertisches 54 um die senkrechte Achse B drehbar ist. Im Flanschring 56 ist eine Büchse 58 längs der Achse B verschiebbar geführt. In der Büchse 58 sind in gleichmäßigen Winkelabständen gegeneinander versetzt rings um die Achse B mehrere Klemmkörper 60 radial verschiebbar geführt, die durch je eine in Fig. 3 vereinfacht als Feder 62 dargestellte mechanische Spannvorrichtung in Richtung zur Achse B hin vorgespannt sind. Die Büchse 58 ist am Flanschring 56 durch Federn 64 axial nach oben vorgespannt, so daß sie sich nur durch einen auf den Hohlkörper 10 ausgeübten Druck nach unten bewegen läßt.

Nach einer Drehung des Revolvertisches 54 um 90° erreicht die Halterung 50, in die der zweite Stößel 46 eine Filteranordnung eingeschoben hat, eine Stellung, in der die mit der gemeinsamen Achse A von Hohlkörper 10 und Innenkörper 12 übereinstimmende Achse B der Halterung 50 zentrisch zwischen drei ortsfesten Lagerböcken 66 steht, die um 120° gegeneinander versetzt rings um diese Achse angeordnet sind. An jedem der Lagerböcke 66 ist ein Elektrodenträger 68 um eine waagerechte Schwenkachse C schwenkbar gelagert. In jedem der drei Elektrodenträger 68 ist eine in Betriebsstellung senkrechte Welle 70 gelagert, an der oben eine Elektrodenrolle 72 und unten ein Antriebsrad 74 befestigt ist. Die drei Antriebsräder 74 haben Bogenverzahnungen und kämmen mit einem gemeinsamen Zentralrad 76, das ebenfalls bogenverzahnt ist.

Die Bogenverzahnungen der Räder 74 und 76 haben eine gemeinsame Mittelebene E, in der auch die Schwenkachsen C liegen.

Senkrecht über dem Zentralrad 76 ist ein dritter Stößel 78 angeordnet, der eine drehbar gelagerten Ring 80 zur Einwirkung auf die obere Stirnfläche des unter ihm stehenden Hohlkörpers 10 aufweist. Der Stößel 78 ist mittels eines Vorschubantriebs 82 in Gestalt einer pneumatischen Kolbenzylindereinheit auf- und abbewegbar.

Die Filteranordnung ist in Fig. 3 auf der linken Seite der gemeinsamen Achse A in ihrer Transportstellung abgebildet, in der sie über die Elektrodenrollen 72 hinwegbewegbar ist. Durch Absenken des Stößels 78 läßt sich die Filteranordnung samt der sie drehbar lagernden Halterung 50 in eine Arbeitsstellung bringen, die in Fig. 3 rechts von der gemeinsamen Achse A abgebildet ist. In der Arbeitsstellung ist die Ringzone 25 in Höhe der Elektrodenrollen 72 angeordnet; diese sind zunächst geringfügig nach außen geschwenkt, ohne daß der Zahnengriff zwischen den Antriebsrädern 74 und dem Zentralrad 76 unterbrochen wäre.

Jedem der Elektrodenträger 68 ist ein Schwenkantrieb 84 zur Schwenkung um die zugehörige Schwenkachse C zugeordnet. Die Schwenkantriebe 84 werden nun betätigt, so daß die drei Elektrodenrollen 72 zur Ringzone 25 hin geschwenkt werden. Sobald die Elektrodenrollen 72 ihre in Fig. 3 abgebildete Betriebsstellung erreicht haben, wird ein Drehantrieb 86 eingeschaltet, der über das Zentralrad 76 und die Antriebsräder 74 die drei Elektrodenrollen 72 in gleichsinnige Drehung versetzt.

Jede der Elektrodenrollen 72 hat eine Ringnut 88; in dieser ist eine Drahtelektrode 90 geführt, die geringfügig aus der Ringnut 88 herausragt und mit einem vom Schwenkantrieb 84 er zeugten Druck an der Ringzone 25 anliegt, so daß auch der Hohlkörper 10, und mit ihm die gesante vormontierte Filteranordnung in Drehung versetzt wird. Zum Schweißen ist ein Transformator 92 vorgesehen, dessen Primäranschlüsse R, S und T an ein Drehstromnetz angeschlossen sind und dessen Sekundäranschlüsse U, V und W mit je einem der drei Elektrodenträger 68 verbunden sind. Jeder der Elektrodenträger 68 ist über eine in ihm enthaltene elektrisch leitende Flüssigkeit mit der zugehörigen Elektrodenrolle 72 verbunden.

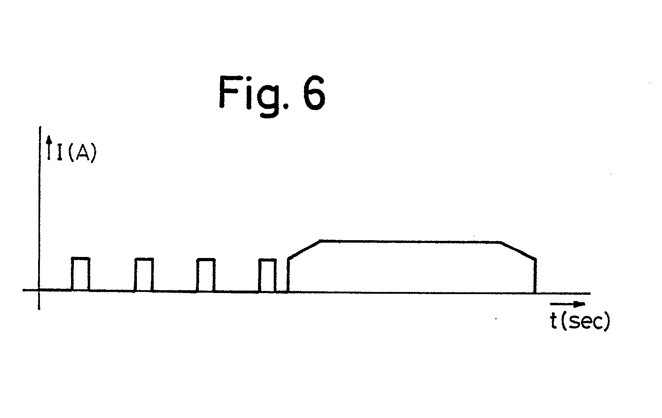

In Fig. 6 ist der Stromverlauf während des Verschweißens des Hohlkörpers 10 mit dem zugehörigen Innenkörper 12 dargestellt. Während einer Drehung der Filteranordnung samt Halterung 50 um etwa 120° wird der Strom viermal eingeschaltet, so daß der Hohlkörper 10 über jede der drei Drahtelektroden 90 an vier Stellen, insgesamt also an 12 Stellen, an den Innenkörper 12 angeheftet wird. Während einer weiteren Drehung um etwa 120° bleibt der Strom eingeschaltet, wodurch der Hohlkörper 10 in der gesamten Ringzone 25 mit dem Innenkörper 12 verschweißt wird. Am Innenkörper 12 ist nur seine Ringrippe 22 von der Schweißung betroffen, da nur in der Ringzone 25 rings um diese Ringrippe der Stromübergangswiderstand gering ist. In dieser Ringzone 25 entsteht eine feste und vollständig dichte Schweißnaht.

Sobald die Schweissnaht fertig ist, werden die Elektrodenrollen 72 voneinander weggeschwenkt. Dann gibt der Stössel 78 den Hohlkörper 10 frei, so dass die Halterung 50 samt Filteranordnung von den Federn 64 wieder in die Transportstellung gehoben wird. Anschliessend wird der Revolvertisch 54 um weitere 90° gedreht, so dass die geschweisste Filteranordnung über einem weiteren konischen Gesenk 94 zu stehen kommt. Oberhalb des Gesenks 94 ist ein vierter Stössel 96 angeordnet, der die Filteranordnung in das Gesenk hineindrückt, so dass . der untere Rand des Hohlkörpers 10, der sich beim Schweissen etwas gewellt haben kann, fest gegen einen unteren Randbereich des Innenkörpers 12 gedrückt wird.

Schließlich wird die nun fertig gestellte Filteranordnung von einer am Stößel 96 angeordneten Zange 98 erfaßt, angehoben und auf einem Förderer 100 abgesetzt.

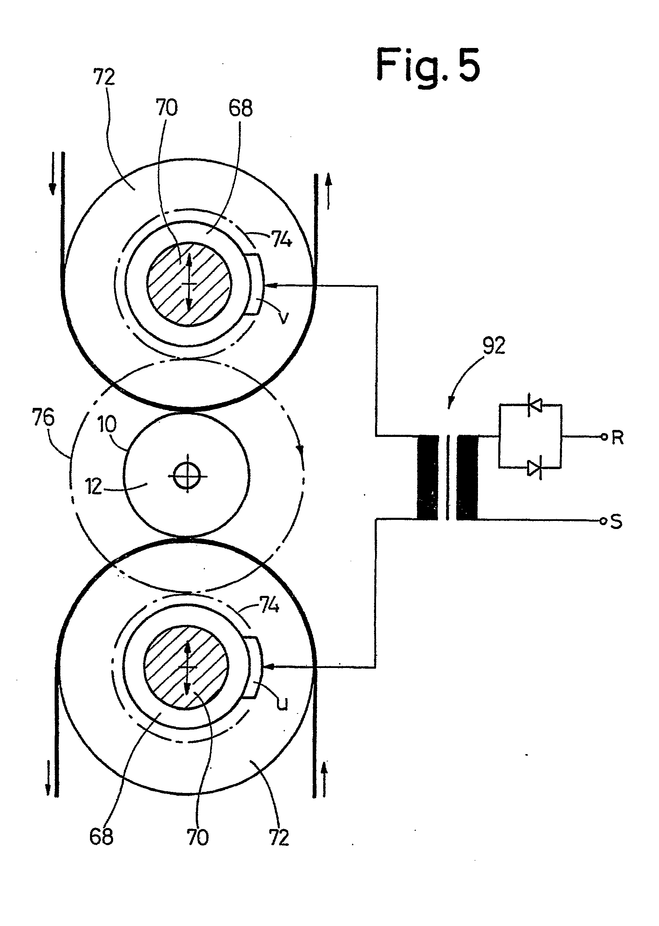

Die in Fig. 5 dargestellte Variante unterscheidet sich von der bisher beschriebenen dadurch, daß zum Schweißen nur zwei Elektrodenrollen 72 vorhanden und einander diametral gegenüber angeordnet sind. Der zugehörige Transformator 92 ist ein Wechselstromtransformator. Bei dieser Anordnung ist zum Heften und zum Dichtschweißen je eine halbe Umdrehung der Filteranordnung erforderlich.

**Patentansprüche**

1. Verfahren zum dichten Verbinden eines runden Hohlkörpers (10) aus Blech mit einem komplementären Innenkörper (12) zu einem Werkstück, wobei diese beiden Körper längs einer gemeinsamen Achse (A) ineinandergeschoben werden und wobei die Verbindung mittels elektrischer Widerstandsschweissung durch Anlegen von Elektrodenrollen (72) an der Aussenseite des Werkstücks während einer Relativdrehung zwischen den Elektrodenrollen einerseits und dem Werkstück andererseits hergestellt wird, dadurch gekennzeichnet, dass
— zwischen den beiden Körpern (10, 12) ein Presssitz in einer schmalen Ringzone (25) hergestellt wird, und
— anschliessend mindestens zwei Elektrodenrollen (72) in der Ringzone (25) radial von aussen her an den Hohlkörper (10) angelegt werden, wobei der Schweissstrom (I) ausschliesslich durch die aussen am Hohlkörper (10) anliegenden Elektrodenrollen (72) zu- und abgeführt wird.

2. Verfahren nach Anspruch 1, dadurch gekennzeichnet, dass die Ringzone (25) eine Breite in der Grössenordnung der ein- bis dreifachen Blechdicke des Hohlkörpers (10) hat.

3. Verfahren nach Anspruch 1 oder 2, dadurch gekennzeichnet, dass der Hohlkörper (10) beim Herstellen des Presssitzes über seine Elastizitätsgrenze hinaus aufgeweitet wird.

4. Verfahren nach Anspruch 3, dadurch gekennzeichnet, dass am Innenkörper (12) eine Ringrippe (22) angeformt wird, die beim Ineinanderschieben der beiden Körper (10, 12) den Presssitz erzeugt.

5. Verfahren nach Anspruch 4, dadurch gekennzeichnet, dass der Hohlkörper (10) nach dem Herstellen des Presssitzes, vor oder nach dem Schweissen, in einem die Ringrippe (22) übergreifenden Endbereich radial nach innen verformt wird.

6. Verfahren nach Anspruch 4 oder 5, dadurch gekennzeichnet, dass am Innenkörper (12) vor der Ringrippe (22) ein Zentrieransatz (24) ausgebildet wird, der mit geringem Spiel in den Hohlkörper (10) passt, und die Ringrippe (22) ein von dem Zentrieransatz (24) aus allmählich ansteigendes Profil aufweist.

7. Verfahren nach einem der Ansprüche 1 bis 6, dadurch gekennzeichnet, dass die Elektrodenrollen (72) beim Widerstandsschweissen auf dem Hohlkörper (10) abgewälzt werden.

8. Verfahren nach einem der Ansprüche 1 bis 7, dadurch gekennzeichnet, dass bei einer anfänglichen Relativdrehung zwischen den beiden Körpern (10, 12) einerseits und den Elektrodenrollen (72) andererseits der Schweissstrom (I) mehrfach ein- und ausgeschaltet wird, wodurch die beiden Körper (10, 12) zunächst nur zusammengeheftet werden, und anschliessend bei fortgesetzter Relativdrehung der Schweissstrom (I) zum Herstellen einer dichten Schweissnaht eingeschaltet bleibt.

9. Verfahren nach einem der Ansprüche 1 bis 8, dadurch gekennzeichnet, dass die Widerstandsschweissung mit drei Elektroden (90) ausgeführt wird, die mit Drehstrom gespeist werden.

10. Verfahren nach den Ansprüchen 8 und 9, dadurch gekennzeichnet, dass die anfängliche und die fortgesetzte Relativdrehung um je ungefähr 120° ausgeführt werden.

11. Vorrichtung zum Verbinden eines runden Hohlkörpers (10) aus Blech mit einem komplementären Innenkörper (12) mittels elektrischer Widerstandsschweissung nach dem Verfahren gemäss einem der Ansprüche 1 bis 10, mit

– einer Halterung (50) für einen Hohlkörper (10) mit einem eingeschobenen Innenkörper (12), welche um eine Drehachse (B), die mit der gemeinsamen Achse (A) beider Körper (10, 12) übereinstimmt, drehbar ist,

– mindestens zwei Elektrodenrollen (72), deren Drehachsen in Betriebsstellung mindestens annähernd parallel zur Drehachse (B) der Halterung (50) angeordnet sind,

– einem Zustellantrieb (84) für eine radiale Relativbewegung zwischen der Halterung (50) und den Elektrodenrollen (72), und mit

– einem Drehantrieb (86) für die Relativdrehung zwischen den Elektrodenrollen (72) einerseits und dem Hohlkörper (10) mit eingeschobenem Innenkörper (12) andererseits, dadurch gekennzeichnet,

– dass die mindestens zwei Elektrodenrollen (72) rings um die Drehachse (B) der Halterung (50) symmetrisch verteilt auf der Höhe einer zu schweissenden Ringzone (25) angeordnet sind, und

– dass der Schweissstrom ausschliesslich über die mindestens zwei Elektrodenrollen (72) zu- und abgeführt wird.

12. Vorrichtung nach Anspruch 11, dadurch gekennzeichnet, dass jede Elektrodenrolle (72) in einem Elektrodenträger (68) gelagert ist, der um eine Schwenkachse (C) schwenkbar ist, welche sich in einem Abstand quer zur Drehachse (B) der Halterung (50) erstreckt.

13. Vorrichtung nach Anspruch 12, dadurch gekennzeichnet, dass die Elektrodenrollen (72) mit je einem Antriebsrad (74) verbunden sind, das mindestens in Betriebsstellung der Elektrodenrollen (72) mit einem Zentralrad (76) in Eingriff steht, welches den Antriebsrädern (74) gemeinsam zugeordnet und mit dem Drehantrieb (86) verbunden ist.

14. Vorrichtung nach Anspruch 13, dadurch gekennzeichnet, dass die Schwenkachsen (C) sämtlicher Elektrodenträger (68) in einer gemeinsamen Mittelebene (E) der genannten Räder (74, 76) liegen.

15. Vorrichtung nach Anspruch 14, dadurch gekennzeichnet, dass die Elektrodenrollen (72) je eine Ringnut (88) haben, in der eine Drahtelektrode (90) geführt ist.

16. Vorrichtung nach einem der Ansprüche 11 bis 15, dadurch gekennzeichnet, dass drei Elektrodenrollen (72) in Abständen von 120° rings um die Drehachse (B) der Halterung (50) angeordnet und an je eine Phase (U, V, W) auf der Sekundärseite eines Drehstromtransformators (92) angeschlossen sind.

17. Vorrichtung nach einem der Ansprüche 11 bis 16, dadurch gekennzeichnet, dass zur Halterung (50) eine Büchse (58) gehört, die Klemmkörper (60) zum Festhalten des Hohlkörpers (10) aufweist und von einem Vorschubantrieb (82) axial zwischen einer Transportstellung und einer Schweissstellung hin- und herbewegbar ist.

**Claims**

1. A method for the tight connection of a round hollow body (10) of sheet metal to a complementary inner body (12) to form a workpiece, these two bodies being pushed one inside the other along a common axis (A) and the connection being established by means of electrical resistance welding by applying electrode rollers (72) to the outside of the workpiece during a relative rotation between the electrode rollers on the one hand and the workpiece on the other hand, characterised in that

– a force fit is established between the two bodies (10, 12) in a narrow annular region (25), and

– then at least two electrode rollers (72) are applied to the hollow body (10) radially from the outside, in the annular region (25), the welding current (I) being led in and out exclusively through the electrode rollers resting externally against the hollow body (10).

2. A method according to Claim 1, characterised in that the annular region (25) has a width of the order of magnitude of one to three times the thickness of the sheet-metal of the hollow body (10).

3. A method according to Claim 1 or 2, characterised in that the hollow body (10) is widened out beyond its elastic limit during the production of the force fit.

4. A method according to Claim 3, characterised in that formed on the inner body (12) is an annular rib (22) which produces the force fit when the two bodies (10, 12) are pushed one inside the other.

5. A method according to Claim 4, characterised in that, after the production of the force fit, before or after the welding, the hollow body (10) is deformed radially inwards in an end region engaging over the annular rib.

6. A method according to Claim 4 or 5, characterised in that a centering shoulder (24), which fits in the hollow body (10) with slight clearance, is formed on the inner body (12) in front of the annular rib (22), and the annular rib (22) has a profile which rises gradually from the centering shoulder (24).

7. A method according to any one of Claims 1 to 6, characterised in that the electrode rollers (72) are rolled on the hollow body (10) during the resistance welding.

8. A method according to any one of Claims 1 to 7, characterised in that, during an initial relative rotation between the two bodies (10, 12) on the one hand and the electrode rollers (72) on the other hand, the welding current (I) is repeatedly switched on and off as a result of which the two bodies (10, 12) are at frist only tacked together, and then, during continued relative rotation, the welding current (I) remains switched on for the production of a tight welding seam.

9. A method according to any one of Claims 1 to 8, characterised in that the resistance welding is carried out with three electrodes (90) which are fed with three-phase current.

10. A method according to Claims 8 and 9, characterised in that the initial and the continued relative rotation are each effected through approximately 120°.

11. An apparatus for connecting a round hollow body (10) of sheet-metal to a complementary inner body (12) by means of electrical resistance welding by the method according to any one of Claims 1 to 10, having
– a holding means (50) for a hollow body (10) with an inserted inner body (12), which holding means is rotatable about an axis of rotation (B) which coincides with the common axis (A) of the two bodies (10, 12),
– at least two electrode rollers (72) of which the axes of rotation are arranged, in the operating position, at least substantially parallel to the axis of rotation (B) of the holding means (50),
– a positioning drive (84) for a radial relative movement between the holding means (50) and the electrode rollers (72), and having
– a rotary drive (86) for the relative rotation between the electrode rollers (72) on the one hand and the hollow body (10) with inserted inner body (12) on the other hand, characterised in that
– the at least two electrode rollers (72) are arranged symmetrically distributed round the axis of rotation (B) of the holding means (50), at the height of an annular region (25) to be welded, and
– that the welding current is fed in and out exclusively via the at least two electrode rollers (72).

12. An apparatus according to Claim 11, characterised in that each electrode roller (72) is mounted in an electrode support (68) which is pivotable about a pivotal axis (C) which extends, with spacing, transversely to the axis of rotation (B) of the holding means (50).

13. An apparatus according to Claim 12, characterised in that the electrode rollers (72) are each connected to a driving pinion (74) which, at least in the operating position of the electrode rollers (72), is in engagement with a central wheel (76) which is associated with the driving pinions (74) jointly and is connected to the rotary drive (86).

14. An apparatus according to Claim 13, characterised in that the pivotal axes (C) of all the electrode supports (68) lie in a common central plane (E) of the said wheels (74, 76).

15. An apparatus according to Claim 14, characterised in that the electrode rollers (72) each have an annular groove (88) in which a wire electrode (90) is guided.

16. An apparatus according to any one of Claims 11 to 15, characterised in that three electrode rollers (72) are arranged at intervals of 120° round the axis of rotation (B) of the holding means (50) and are each connected to one phase (U, V, W) at the secondary side of a three-phase transformer (92).

17. An apparatus according to any one of Claims 11 to 16, characterised in that the holding means (50) includes a sleeve (58) which comprises clamping members (60) to grip the hollow body (10) and can be moved axially backwards and forwards between a conveying position and a welding position by a feed drive (82).

**Revendications**

1. Procédé d'assemblage étanche d'un corps creux (10) rond en tôle et d'un corps intérieur (12) complémentaire pour constituer une pièce ouvrée, ces deux corps étant introduits l'un dans l'autre le long d'un axe (A) commun, et l'assemblage étant réalisé par soudage par résistance électrique, par application de galets électrodes (72) sur la face extérieure de la pièce, pendant une rotation relative des galets électrodes d'une part et de la pièce d'autre part, caractérisé en ce que:
– un ajustage serré est réalisé entre les deux corps (10, 12), dans une zone annulaire (25) étroite, et
– ensuite, deux galets électrodes (72) au moins sont appliquées dans la zone annulaire (25), contre le corps creux (10), radialement à partir de l'extérieur, le courant de soudage (I) étant exclusivement envoyé et évacué par les galets électrodes (72) s'appliquant de l'extérieur contre le corps creux (10).

2. Procédé selon la revendication 1, caractérisé en ce que la zone annulaire (25) a une largeur dont l'ordre de grandeur est de deux à trois fois l'épaisseur de la tôle du corps creux (10).

3. Procédé selon la revendication 1 ou 2, caractérisé en ce que le corps creux (10) est élargi au-delà de sa limite élastique, pendant la réalisation de l'ajustage serré.

4. Procédé selon la revendication 3, caractérisé en ce qu'une côte annulaire (22) qui produit l'ajustage serré, lorsqu'on introduit l'un dans l'autre les deux corps (10, 12), est formée sur le corps intérieur (12).

5. Procédé selon la revendication 4, caractérisé en ce que le corps creux (10) est déformé radialement vers l'intérieur, dans une zone terminale passant sur la côte annulaire (22), après réalisation de l'ajustage serré, avant ou après soudage.

6. Procédé selon la revendication 4 ou 5, caractérisé en ce qu'un talon de centrage (24) est formé sur le corps intérieur (12), avant la côte annulaire (22), lequel talon s'ajuste avec un faible jeu dans le corps creux (10), et en ce que la côte annulaire (22) présente un profil croissant progressivement à partir du talon de centrage (24).

7. Procédé selon l'une des revendications 1 à 6, caractérisé en ce que les galets électrodes (72) roulent sur le corps creux (10) pendant le soudage par résistance.

8. Procédé selon l'une des revendications 1 à 7, caractérisé en ce que pendant une rotation relative initiale entre les deux corps (10, 12) d'une part et les galets électrodes (72) d'autre part, le courant de soudage (I) est mis et coupé plusieurs fois, ce qui fait que les deux corps (10, 12) ne sont tout d'abord que soudés par points, puis en ce que pendant la poursuite de la rotation relative, le courant de soudage (I) reste enclenché pour obtenir un cordon de soudure étanche.

9. Procédé selon l'une des revendications 1 à 8, caractérisé en ce que le soudage par résistance s'effectue avec trois électrodes (90) qui sont alimentées en courant triphasé.

10. Procédé selon les revendications 8 et 9, caractérisé en ce que la rotation relative initiale et poursuivie s'effectuent chacune sur 120° environ.

11. Dispositif d'assemblage d'un corps creux (10) rond en tôle et d'un corps intérieur (12) complémentaire par soudage, par résistance électrique, selon le procédé suivant l'une des revendications 1 à 10, comportant:

– un support (5) destiné à un corps creux (10) avec un corps intérieur (12) introduit dans le premier, lequel support tourne autour d'un axe (B) qui coïncide avec l'axe (A) commun des deux corps (10, 12),

– au moins deux galets électrodes (72) dont les axes de rotation en position de fonctionnement sont au moins à peu près parallèles à l'axe de rotation (B) du support (50),

– un mécanisme d'approche (84) pour un déplacement radial relatif du support (50) et des galets électrodes (72), et comportant un mécanisme d'entraînement en rotation (86) pour la rotation relative des galets électrodes (72) d'une part et du corps creux (10) avec corps intérieur (12) inséré d'autre part, caractérisé

– en ce que deux galets électrodes (72) sont répartis symétriquement autour de l'axe de rotation (B) du support (50), à la hauteur d'une zone annulaire (25) à souder, et

– en ce que le courant de soudage est exclusivement envoyé et évacué par les galets électrodes (72) qui sont au moins au nombre de deux.

12. Dispositif selon la revendication 11, caractérisé en ce que chaque galet électrode (72) est monté dans un support d'électrode (68) qui peut basculer autour d'un axe de rotation (C), lequel s'étend perpendiculairement à l'axe de rotation (B) du support (50) à une certaine distance de celui-ci.

13. Dispositif selon la revendication 12, caractérisé en ce que les galets électrodes (72) sont reliés chacun à une roue d'entraînement (74) qui est en prise, au moins en position de fonctionnement des galets électrodes (72), avec une roue centrale (76), laquelle est associée aux roues d'entraînement (74) en commun, et est reliée au mécanisme d'entraînement en rotation (86).

14. Dispositif selon la revendication 13, caractérisé en ce que les axes de rotation (C) de tous les supports d'électrode (68) se situent dans un plan médian (E) commun aux roues (74, 76) citées.

15. Dispositif selon la revendication 14, caractérisé en ce que les galets électrodes (72) présentent chacun une côte annulaire (88) dans laquelle passe un fil-électrode (90).

16. Dispositif selon l'une des revendications 11 à 15, caractérisé en ce que trois galets électrodes (72) sont disposés, espacés de 120°, autour de l'axe de rotation (B) du support (50) et sont raccordés chacun à une phase (U, V, W), sur le côté secondaire d'un transformateur à courant triphasé (92).

17. Dispositif selon l'une des revendications 11 à 16, caractérisé en ce que le support (50) comporte une douille (58) qui présente des corps de serrage (60) pour serrer le corps creux (10), et qui peut être déplacée axialement, dans un mouvement de va et vient, entre une position de transport et une position de soudage, par un mécanisme d'avance (82).

# Fig.1

EP 0 230 614 B1

# Fig. 2

Fig. 3

# Fig. 4

# Fig. 5

# Fig. 6